# EUROPEAN PATENT SPECIFICATION

(11) **EP 2 524 730 B1**
(45) Date of publication and mention of the grant of the patent: **17.09.2014**
(21) Application number: 12168393.2
(22) Date of filing: 16.05.2012
(51) Int. Cl.: B03C 1/28, B03C 1/30, B03C 1/033

(54) **Apparatus for magnetic separation of particles**
Vorrichtung zur magnetischen Trennung von Teilchen
Appareil pour la séparation magnétique des particules

(30) Priority: 16.05.2011 GB 201108156
(43) Date of publication of application: 21.11.2012
(73) Proprietor: Lettergold Plastics Ltd, Newmarket, Suffolk CB8 0AZ (GB)
(72) Inventor: Drummond, Andrew Robertson, Newmarket, Suffolk CB8 0AZ (GB)
(74) Representative: Wightman, David Alexander

(56) References cited:
- GB-A- 2 402 894
- GB-A- 2 469 145

## Description

This invention relates to apparatus for use in a fluid circuit such as a heating system for removing magnetic particles suspended in the fluid flow, for example to separate ferrous particles from water flowing around a heating system.

Corrosion in central heating systems gives rise to formation of ferrous particles sometimes referred to as magnetite that can build up over time and may restrict flow resulting in reduced efficiency of the heating system.

The ferrous particles are magnetic and it has been proposed in GB 2402894-A to remove these from the water flowing around the system by providing a housing have an inlet and an outlet for connection to the fluid system and positioning a magnet in the housing so as to remove ferrous particles suspended in the water flowing through the housing using the magnetic attraction force of the magnet. In the arrangement in GB 2402894-A, the magnet is suspended from a removable lid that also incorporates an air bleed device for removing air that collects within the housing.

With the arrangement in GB 2402894-A, the lid is released to remove the magnet from the housing when it is desired to dispose of the ferrous particles. A disadvantage of this arrangement is that the housing cannot be fully emptied, potentially leaving dirty water inside. Also, the provision of the air bleed device in the lid provides a point of weakness that can result in leakage under the fluid pressure within the system.

The present invention has been made from a consideration of the foregoing problems and seeks to provide apparatus that overcomes or at least mitigates some or all of the problems.

GB2469145A, against which claim 1 is delimited, discloses a magnetic filter suitable for a heating system or drinking water system. The air vent in the cap of the housing is adapted to improve the reliability for avoiding leakage.

Thus, according to a first aspect of the invention, there is provided apparatus including a housing having an inlet and an outlet for connection to a fluid circuit, a magnet positioned in the housing for removing magnetic particles carried by a flow of fluid through the housing, characterised in that the housing is provided with a drain outlet at a lower end of the housing and the magnet extends within a tube that extends from the drain outlet to an upper end of the housing so that, in use, magnetic particles separated from the fluid flow are collected on the outer surface of the tube and wherein air or other gases that collect in the housing can flow downwardly within the tube to be discharged from the housing when the drain outlet is open.

It may be that the drain outlet can be opened when it is desired to remove air or gases from within the housing.

It may be that magnetic particles collected on the outer surface of the tube in use can be released and can be discharged from the housing through the drain outlet. Thus, the magnet may be removed from within the tube to release the magnetic particles and the drain outlet may be opened when it is desired to remove the particles from within the housing.

In this way, the drain outlet at the lower end of the housing can provide a means for removing air or other gases that collect in the housing and a means for removing magnetic particles that are separated from the fluid flow and collect on the outer surface of the tube.

In one arrangement, the housing comprises a container having the drain outlet and a removable lid that closes an opening at the upper end of the container and supports the magnet so that the magnet is removed from the housing when the lid is detached from the container.

With this arrangement, the contents of the housing can be fully emptied when the drain outlet is opened and any magnetic particles or other material(s) that may be left behind when draining the housing may be removed by flushing the housing with clean water introduced through the open top of the container when the lid is detached.

The inlet and outlet are preferably provided in a sidewall of the container and may be provided with valves that can be closed to isolate the housing from the fluid circuit when it is desired to remove the magnet to release the magnetic particles collected on the tube.

The tube is preferably located in a fluid-tight manner relative to the drain outlet at the lower end of the housing and a clearance gap is provided between the tube and the upper end of the housing to allow air or other gases that collect in the housing to flow downwardly within the tube and out of the housing when the drain outlet is open.

The tube may be removable so that magnetic particles that are released and collect at the lower end of the housing when the magnet is removed from the tube can be discharged from the housing when the drain outlet is open.

Alternatively, the tube may be configured to provide one or more openings at the lower end of the housing that are normally closed when the housing is connected to the fluid circuit and fluid is circulated through the housing with the drain outlet closed, and that can be opened when the housing is isolated from the fluid circuit so that magnetic particles released from the surface of the tube when the magnet is removed from the tube can be discharged from the housing when the drain outlet is open.

The drain outlet may be provided with a drain valve that can be closed to prevent escape of fluid when the housing is connected to the fluid circuit and fluid is circulated through the housing and can be opened when it is desired to remove air or other gases from within the housing or to remove magnetic particles collected from the water flowing through the housing.

A filter (or strainer) may be provided in the housing for collecting and removing particles and in particular for collecting and removing non-magnetic particles that are not collected and removed by the magnetic filter. The filter may comprise a mesh, preferably a metal mesh such as knitted stainless steel mesh although other materials unaffected by the fluid may be employed including non-corrosive or inert metals, alloys, plastics and composites thereof. The filter may be located and supported on the tube. The filter may be removable. The filter may be cleaned to remove collected particles and re-used. Alternatively, the filter may be disposable and may be thrown away and replaced by a new filter.

In one arrangement, the filter may be positioned in the fluid flow from the inlet to the outlet. In this way, particles, especially non-magnetic particles, suspended in the fluid flow through the housing may be collected and removed from the fluid flow by the filter. The filter may be arranged in the housing with clearance for fluid flow to by-pass the filter. In this way fluid can continue to flow through the housing if the filter becomes blocked. Also, fluid can flow past the filter if the filter is removed from the housing, for example to clean or replace the filter, reducing the risk of spillage when removing the filter. The clearance may be provided by a gap between the filter and the housing at the outer periphery of the filter. Alternatively or additionally the clearance may be provided by a gap between the filter and the tube at the inner periphery of the filter. The gap may formed by appropriate selection of the size and/or shape of the filter. The filter may be fitted in and removed from the housing with the tube.

In another arrangement, the filter may be positioned out of the fluid flow from the inlet to the outlet. For example, the filter may be positioned towards the bottom of the housing below the outlet. In this way, particles, especially non-magnetic particles, that settle in the housing, for example when the fluid is not circulating, may be collected and removed from the fluid flow by the filter. The filter may remain in place when the tube is removed from the container. The location and/or configuration of the filter may be such that the tube can be raised to open the drain outlet without removing the tube from the filter. In this way, the filter may filter substantially all the fluid drained through the outlet. As a result, discharge of fluid containing particles, especially non-magnetic particles, which may be potentially harmful to the environment, may be prevented.

According to a second aspect of the invention, there is provided a method of removing magnetic particles suspended in a fluid flow, the method comprising providing a housing with an inlet and an outlet, connecting the fluid flow to the inlet and outlet so that fluid flows through the housing from the inlet to the outlet, positioning a magnet within a tube within the housing so that magnetic particles in the fluid flow collect on the tube, closing the inlet and outlet to isolate the housing from the fluid flow, removing the magnet so that the magnetic particles collected on the tube are released and fall to a lower end of the housing, opening a drain outlet at the lower end of the housing to discharge the magnetic particles through the drain outlet, replacing the magnet in the tube and re-filling the housing, wherein the tube extends from the drain outlet to an upper end of the housing so that air or other gases within the housing can flow downwards through the tube to be discharged from the housing when the drain outlet is open.

The method steps may be carried out in the order recited or in a different order.

The invention will now be described in more detail by way of example only with reference to the accompanying drawings wherein:
**Figure 1** is a part-vertical section of an apparatus embodying the invention;
**Figure 2 to 4** show the procedure for filling the apparatus of Figure 1 with water and bleeding air from the apparatus;
**Figures 5 to 8** show the procedure for cleaning the apparatus of Figure 1; and
Figures 9 and 10 show modifications to the apparatus of Figure 1.

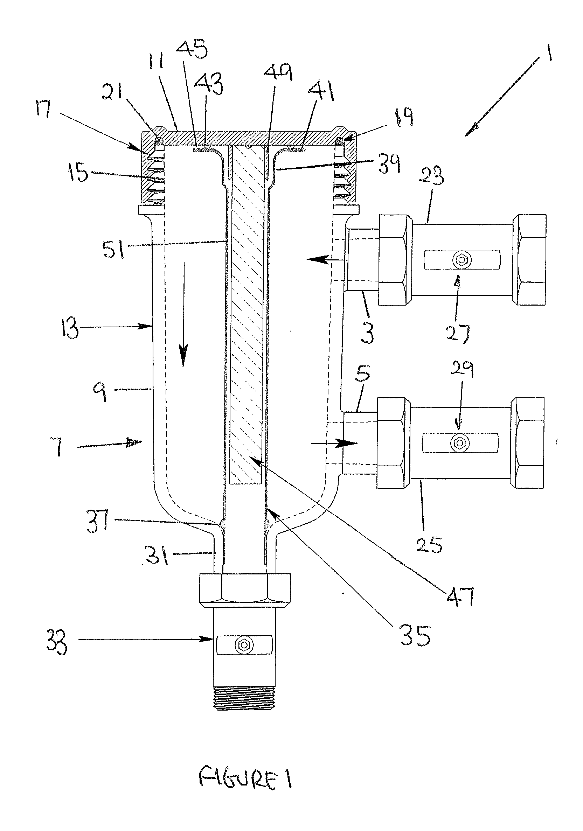

Referring first to Figure 1 of the drawings, apparatus 1 is shown for removing magnetic particles entrained in water or other liquid circulating in a fluid circuit connected to an inlet 3 and an outlet 5 of the apparatus. The fluid circuit may be a domestic central heating circuit including a boiler and one or more radiators (not shown) where the magnetic particles are typically ferrous particles which may be referred to as magnetite. The apparatus is adapted for removing air or other gases present in the fluid circuit. In this way a build up of magnetite and/or air or other gases within the fluid circuit may be reduced or eliminated.

The apparatus 1 comprises a housing 7 consisting of a container 9 and a lid 11. The container 9 preferably has a substantially cylindrical side wall 13. The container 9 is provided with an external screw thread 15 at the upper end for engagement with a matching internal thread 17 of the lid 11 to secure releasably the lid 11 to the container 9 and close an opening at the upper end of the container 9. An O-ring 19 9 located in a groove 21 in the underside of the lid 11 provides a watertight seal with the upper edge of the sidewall 13 when the lid 11 is screwed onto the container 9. Any other means of providing a watertight seal may be employed. The container 9 and lid 11 may be made of plastics materials, for example glass-filled nylon, and may be formed by moulding. This is not essential and other materials may be used for the container 9 and/or lid 11.

The inlet 3 and outlet 5 are located in the sidewall 13 of the container 9 and in this embodiment are adapted for connecting the housing 7 to the fluid circuit. For example, the inlets 3, 5 may be provided with connectors 23, 25 respectively. The connectors 23, 25 may be of any suitable type. The connectors 23 and 25 may include isolation valves 27 and 29 that can be opened to circulate water through the housing 7 and closed to isolate the housing 7 from the fluid circuit. The housing 7 may include a level sensor (not shown), for example in the lid 11, to assist installing the housing 7 vertically. The level sensor may be of any type that provides an indication of the orientation of the housing to assist installation in the correct position.

The valves 27, 29 may be of any suitable type including, for example, a valve member 27a, 29a rotatable through 90° between an open position as shown in Figure 1 and a closed position (not shown) by releasably engaging a drive member 27b, 29b connected to the valve member 27a, 29a with a tool (not shown). The valve members 27a, 29a may also be rotated to any partially open position intermediate the open and closed positions. In this embodiment the drive member 27b, 29b comprises a hexagonal nut and the valve member 27a, 29a comprises a ball having a through bore 27c, 29c for passage of fluid in the open position. It will be understood that other types of valves may be employed for the inlet 3 and/or outlet 5.

In this embodiment, the inlet 3 is located towards the upper end of the container 9 and the outlet 5 is located towards the lower end of the container 9 so that water flowing into the housing flows downwards and exits through the outlet 5. The inlet 3 may be configured so as to impart a swirling motion to the water as it flows downwards to the outlet 5. For example the inlet 3 may be arranged tangentially to the sidewall 13. The positions of the inlet 3 and outlet 5 could be reversed so that the inlet 3 is towards the lower end and the outlet 5 is towards the upper end. Also, the inlet 3 and outlet 5 may be located one above the other or at circumferentially offset positions.

The lower end of the container 9 is provided with a drain outlet 31. The drain outlet 31 can be opened and closed. Thus, the drain outlet 31 may be provided with a drain valve 33. In this embodiment the drain valve 33 is similar to the valves 27, 29 having a valve member 33a with a through bore 33c and a drive member 33b for rotating the valve member 33a through 90° between a closed position shown in Figure 1 and an open position (not shown). The valve member 33a may also be rotated to any partially open position intermediate the open and closed positions.

The housing 7 includes a tube 35 that extends between the drain outlet 31 and the lid 11. The tube is made of plastics material, for example polypropylene, and may be formed by moulding. Other materials may be employed although it is preferred to use materials that are non-magnetic. The tube 35 is preferably located in a fluid-tight manner relative to the drain outlet 31 at the lower end of the housing 7. For example one end of the tube 35 may be a push-fit in the drain outlet 31. A formation such as an external rib 37 may be provided on the tube 35 that seats on the base 39 of the container 9 at the mouth of the drain outlet 31 to axially locate the tube 35 in the drain outlet 31.

The tube 35 is preferably located relative to the lid 11 at the upper end of the housing 7 so that fluid can flow downwardly within the tube 35 and out of the housing 7 when the drain outlet 31 is open. For example the other end of the tube 35 may have an enlarged section 39 that leads to an external flange 41 that locates against a plurality of raised pips 43 on the underside of the lid 11 to leave a clearance gap 45 between the flange 41 and the lid 11 when the lid is screwed onto the container 9. Any means of enabling fluid to enter the tube at or near the upper end of the housing 7 may be employed. In this way, air or gases that collect in the housing at the upper end may be removed with the tube 35 in place by opening the drain outlet 31.

The tube 35 contains a magnet 47 that is secured at one end within a bush 49 attached to the underside of the lid 11 and extends towards the drain outlet 31. The magnet 47 is of reduced diameter to leave a clearance gap 51 extending the length of the magnet 47 between the magnet and the tube 35 for a purpose to be described later. The free end of the magnet 47 preferably terminates at or beyond the outlet 5 so that water flowing from the inlet 3 to the outlet 5 is exposed to the magnetic attraction force of the magnet 47 through the tube 35. As a result, magnetic particles entrained in the water flow through the housing are attracted to and held on the outer surface of the tube 35 due to the magnetic attraction force of the magnet 47 thereby removing the magnetic particles from the circulating water. The magnet 47 may be of any suitable type as will be familiar to those skilled in the art.

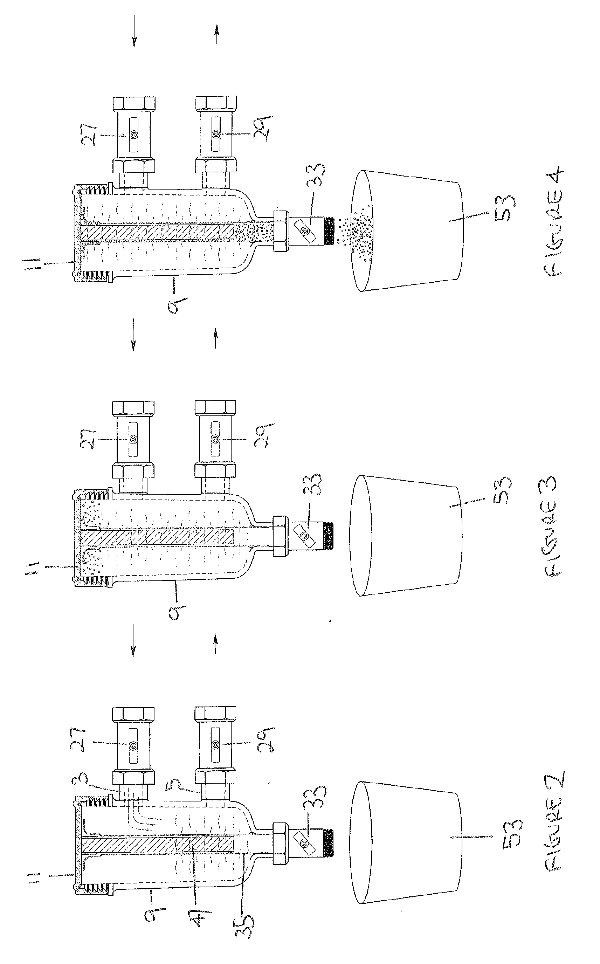

Referring now to Figures 2 to 4, one procedure for filling the housing 7 with water and/or bleeding air from within the housing 7 is shown. The drain valve 33 is partially opened with the inlet valve 27 and outlet valve 29 open (Figure 2) so that air within the housing 7 is forced to the top as the housing 7 fills with water (Figure 3). The air is then forced through the clearage gap 45 between the lid 11 and the flange 41 at the upper end of the tube 35 from where the air is forced down through the tube 35 along the clearance gap 51 between the magnet 47 and the tube 35 and exits the housing 7 through the drain valve 33 (Figure 4). A receptacle 53 placed under the drain outlet 31 collects water that escapes when the air has been completely removed from the housing 7 at which point the drain valve 33 is closed. By positioning the inlet 3 at a position spaced from the lid, air entrained in the circulating fluid rises and is collected above the inlet 3 in use from where it can be removed periodically by opening the drain valve 33 as described. The housing 7 may also be filled by removing the lid 11 with the inlet valve 27, outlet valve 29 and drain valve 33 closed allowing water to be poured into the housing 7 through the open top of the container 9 and then re-securing the lid 11 before opening the inlet valve 27 and outlet valve 29 for circulating water within the fluid circuit through the housing 7. If necessary the drain valve 33 may be partially opened to bleed any air remaining within the housing 7 after the lid 11 is re-secured as described previously

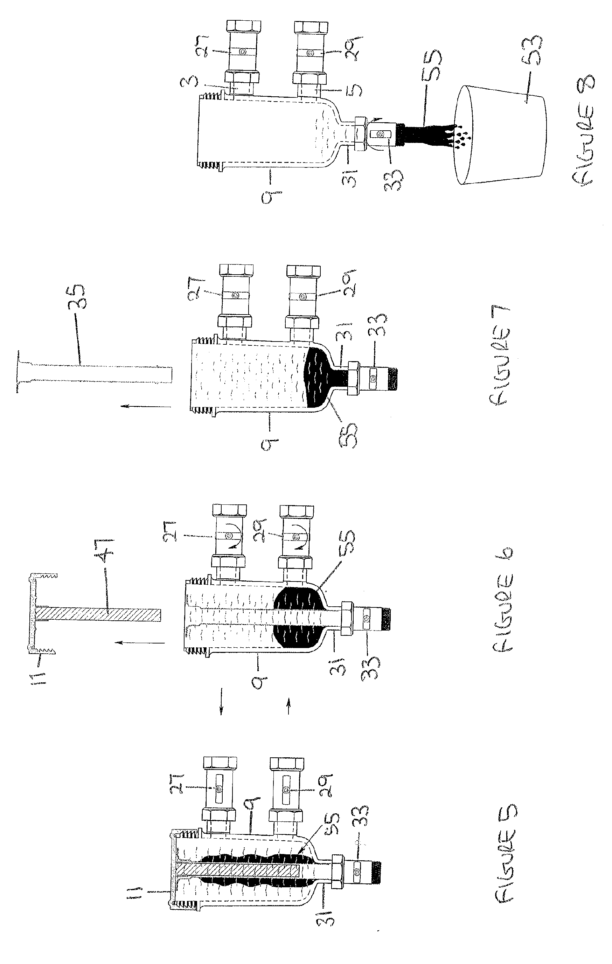

Referring now to Figures 5 to 8, one procedure for removing magnetic particles that collect on the tube 35 in normal use of the apparatus (Figure 5) is shown. The inlet valve 27 and outlet valve 29 are closed to isolate the housing 7 from the fluid circuit. The lid 11 is unscrewed and lifted off the container 9 to withdraw the magnet 47 from within the tube 35. As a result, the magnetic particles are no longer held to the outer surface of the tube 35 and drop to the base of the container 9 (Figure 6). Next the tube 35 is lifted out of the container 9 (Figure 7). The drain valve 33 is then opened to discharge the accumulated magnetic particles together with the water in the container 9 into a receptacle 53 placed under the drain outlet 31 (Figure 8). Water may be poured into the open top of the container 9 to assist in flushing all of the magnetic particles from the container 9. The tube 35 can then be re-fitted and the lid 11 re-attached to the container 9 so as to position the magnet 47 within the tube 35. The inlet valve 27 and outlet valve 29 can then be opened with the drain valve 33 open to fill housing 7 with water and bleed air from within the housing 7 as described previously before closing the drain valve 33. Alternatively, the drain valve 33 may be closed and the container 9 filled with water through the open top before re-attaching the lid 11 and opening the inlet valve 27 and outlet valve 29. Treatment products such as an anti corrosion agent or a cleaning agent or a leak sealing agent may be added and/or samples of the circulating fluid taken for testing at the same time or at any other time as and when required by closing the inlet valve 27 and outlet valve 29, removing the lid 11 and, if required, lowering the water level in the housing by opening the drain valve 33 before adding the treatment product(s). In this way, the apparatus can be used as a dosing point, for example for introducing an additive, and/or a sampling point, for example for removing a sample for testing or analysis, in the system in which it is being used.

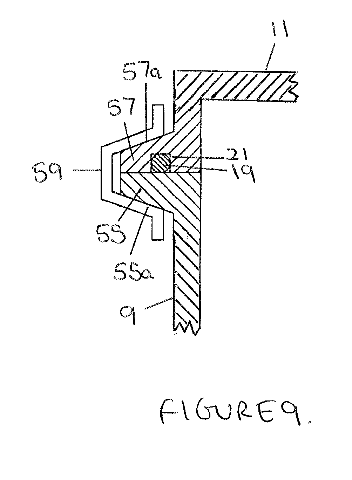

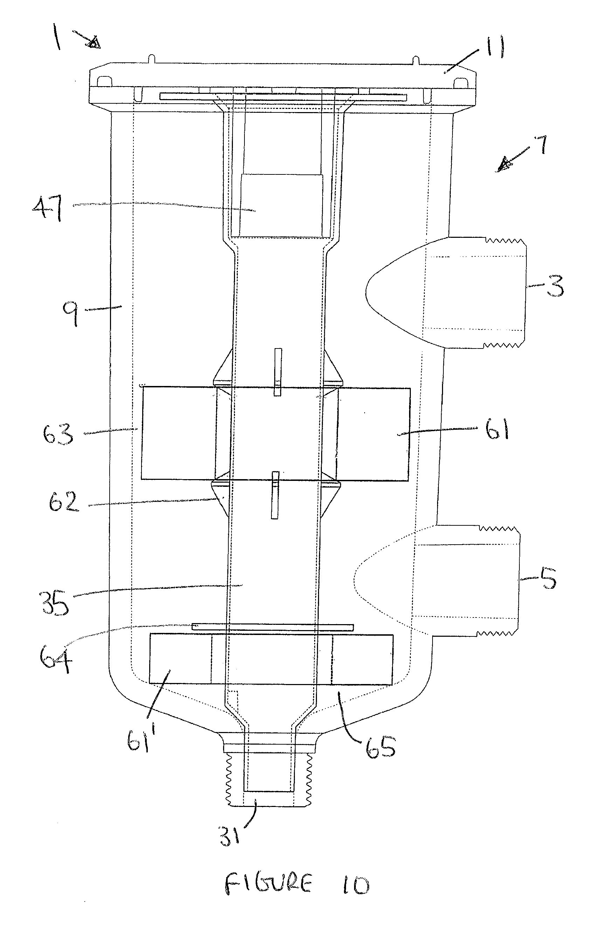

Referring now to Figures 9, and 10, modifications to the apparatus of Figure 1 are shown in which like reference numerals are used to indicate corresponding parts.

In Figure 9, the lid 11 is releasably secured to the container 9 by clamping the lid 11 to container 11. The container 9 has an external flange 55 at the upper end and the lid 11 has an external flange 57 that seats on the flange 55. A locking ring 59 extends around the housing 9 and is generally V-shaped to engage angled faces 55a, 57a of the flanges 55, 57 producing a wedging action to urge the flanges 55, 57 towards each other when the locking ring 59 is fastened to clamp the lid 11 to the container 9. The locking ring 59 may be made of strip metal. Any suitable means (not shown) may be employed to fasten the locking ring 59 such as a toggle lever or bolt. An O-ring 19 located in a groove 21 in the underside of the flange 57 on the lid 11 provides a watertight seal with the flange 55 on the container 9 when the lid 11 is secured to the container 9. Alternatively, the O-ring may be located in a groove in the flange 55 on the container 9. By clamping the lid 11 to the container 9, twisting of the O-ring 19 such as may occur with the screw threaded arrangement of Figure 1 can be avoided. As a result, the seal is not compromised when the lid 11 is secured to the container 9. Furthermore, accidental release of the lid 11 due to fluid pressure acting on the lid 11 such as may occur with the screw threaded arrangement of Figure 1 can be avoided, especially if the lid 11 is not screwed tightly onto the container 9. As a result, the seal is not compromised at elevated fluid pressures.

In Figure 10, two possible positions for locating a filter in the housing 7 are shown. There may be other positions where a filter could be employed. More than one filter may be provided. In a first position, the filter 61 is provided in the fluid flow path between the inlet 3 and outlet 5. In this way, particles, especially non-magnetic particles contained in the fluid passing through the housing 7 may be collected and removed from the fluid flow by the filter 61. In a second position, the filter 61' is provided out of the fluid flow path from the inlet 3 to the outlet 5. In this way, particles, especially non-magnetic particles, that settle in the housing 7, for example when the fluid is not circulating, may be collected and removed from the fluid flow by the filter 61'. The filter 61 or 61' may be in the form of an annular ring with a central opening for the tube 35. The filter 61 or 61' may comprise a mesh such as knitted stainless steel mesh although other materials may be employed. The housing 7 may be provided with a filter 61, 61' in one or both positions. Alternatively the filter 61, 61' may be omitted.

In the first position, the filter 61 may be located and axially retained on the tube 35 by any suitable means, for example formations such as ribs 62 on the tube 35 that extend on opposite sides of the filter 61. In this way, the filter 61 can be fitted in and removed from the container 9 with the tube 35. The filter 61 may be a push fit on the tube 35 and removable from the tube so that it can be separated from the tube 35 for cleaning and/or for replacement or for fitting the tube 35 without the filter 61. The mesh traps and retains non-magnetic particles suspended in the fluid and may be chosen so that fluid flow through the housing 7 can be maintained at an acceptable level. The filter 61 and/or housing 7 may be configured for fluid flow to by-pass the filter 61. In this way fluid can continue to flow through the housing 7 from the inlet 3 to the outlet 5 if the filter 61 becomes blocked. Also, fluid can flow past the filter if the filter 61 is removed from the housing 7 with the tube 35, for example to clean or replace the filter 61. In this way, the risk of spillage when removing the filter 61 may be reduced. It may that the filter is sized and/or shaped to provide a clearance gap 63 between the filter 61 and the sidewall of the housing 7 at the outer periphery of the filter 61. Alternatively or additionally a clearance gap may be provided between the filter 61 and the tube 35 at the inner periphery of the filter 61. The gap may formed by appropriate selection of the size and/or shape of the filter 61. Any other arrangement for by-passing the filter 61 that allows sufficient flow from the inlet 3 to the outlet 5 if the filter 61 is blocked may be employed.

In the second position, the filter 61' may be located towards the bottom of the housing 7 below the outlet 5. The filter 61' may be axially located by any suitable means, for example the filter 61' may be located between a base wall of the housing 7 and a flange or collar 64 on the tube 35. The base wall may be angled towards the drain outlet 31. The filter 61' may contact the base wall at the outer periphery of the filter 61 to leave a space 65 for fluid flow below the filter 61'. The filter 61' may remain in place when the tube 35 is removed from the container 9. The location and/or configuration of the filter 61' may be such that the tube 35 can be raised to open the drain outlet 31 without removing the tube 35 from the central opening of the filter 61'. In this way, the filter 61' may filter substantially all the fluid drained through the outlet 31. As a result, discharge of fluid containing particles, especially non-magnetic particles, which may be potentially harmful to the environment, may be prevented. Alternatively, the filter 61' may be axially located and retained on the tube 35 so as to be fitted in and removed from the housing 7 with the tube 35.

As will now be understood, the present invention provides apparatus for removing magnetic particles and optionally non-magnetic particles from water (or other fluid) circulating in a fluid circuit such as a central heating system with a drain outlet 31 at the lower end of the housing 7 that allows air in the circulating fluid that collects in the housing 7 and/or magnetic particles that collect on the tube 35 under the influence of the magnet 47 to be removed. In this way, an air bleed outlet in the lid 11 is not required so that integrity of the assembly may be improved so as to withstand the pressures existing in the fluid circuit with reduced risk of leaks occurring.

It will be appreciated that the invention is not limited to the embodiments described herein and that modifications and changes can be made without departing from the scope of the invention as defined in the claims. For example, in the illustrated embodiments the magnet is removable from the tube so that any magnetic particles on the surface of the tube are released and collected in the housing for discharge through the drain outlet. In another arrangement, it might be that the tube is removable from the housing together with the magnet so that any magnetic particles on the surface of the tube remain in place when the tube is removed from the housing.

## Claims

1. Apparatus comprising a housing (7) having an inlet (3) and an outlet (5) for connection to a fluid circuit, a magnet (47) positioned in the housing (7) for removing magnetic particles carried by a flow of fluid through the housing (7), **characterised in that** the housing (7) is provided with a drain outlet (31) at a lower end of the housing (7) and the magnet (47) extends within a tube (35) that extends from the drain outlet (31) to an upper end of the housing (7) so that, in use, magnetic particles separated from the fluid flow are collected on the outer surface of the tube (35), and wherein air or other gases that collect in the housing (7) can flow downwardly within the tube (35) to be discharged from the housing (7) when the drain outlet (31) is open.

2. Apparatus according to claim 1 wherein, the magnet (47) is removable from within the tube (35) so that, magnetic particles collected on the outer surface of the tube (35) in use are released and can be discharged from the housing (7) when the drain outlet (31) is open.

3. Apparatus according to claim 1 or claim 2 wherein, the housing (7) comprises a container (9) having the drain outlet (31) at the lower end of the container (9) and a removable lid (11) that closes an opening at the upper end of the container (9) and supports the magnet (47) so that the magnet (47) is removed from the housing (7) when the lid (11) is detached from the container (9).

4. Apparatus according to any preceding claim wherein the inlet (3) is provided in a sidewall (13) of the container (9) and is configured to impart a swirling motion to fluid flowing through the housing (7) and/or so that fluid flowing into the housing (7) is directed away from the tube (35).

5. Apparatus according to any preceding claim wherein, the inlet (3) and outlet (5) are provided with valves (27; 29) that can be closed to isolate the housing (7) from the fluid circuit when it is desired to remove the magnet (47) to release the magnetic particles collected on the tube (35).

6. Apparatus according to any preceding claim wherein, the tube (35) is located in a fluid-tight manner relative to the drain outlet (31) at the lower end of the housing (7) and a clearance gap (45) is provided between the tube (35) and the upper end of the housing (7) to allow air or other gases that collect in the housing (7) to flow downwardly within the tube (35) and out of the housing (7) when the drain outlet (31) is open.

7. Apparatus according to any preceding claim wherein, the tube (35) is removable so that the housing (7) can be emptied when the drain outlet (31) is open.

8. Apparatus according to any of claims 1 to 6 wherein, the tube (35) is configured to provide one or more openings at the lower end of the housing (7) that are normally closed when the housing (7) is connected to the fluid circuit and fluid is circulated through the housing (7) with the drain outlet (31) closed, and that can be opened when the housing (7) is isolated from the fluid circuit so that the housing (7) can be emptied when the drain outlet (31) is open.

9. Apparatus according to any preceding claim wherein, the drain outlet (31) is provided with a drain valve (33) that can be closed to prevent escape of fluid when the housing (7) is connected to the fluid circuit and fluid is circulated through the housing (7) and can be opened when it is desired to remove air or other gases from within the housing (7) or to remove magnetic particles collected from the water flowing through the housing (7).

10. Apparatus according to any preceding claim wherein, the housing (7) can be used as a dosing point for introducing an additive to the fluid circuit and/or as a sampling point for removing a sample from the fluid circuit for testing or analysis.

11. Apparatus according to any preceding claim wherein, the housing (7) includes a level sensor.

12. Apparatus according to any preceding claim wherein the tube (35) is made of a plastics material and/or is non-magnetic.

13. Apparatus according to any preceding claim wherein a filter (61) is provided between the inlet (3) and outlet (5) for removing non-magnetic particles carried by the fluid flow through the housing (7).

14. A method of removing magnetic particles suspended in a fluid flow, the method comprising providing a housing (7) with an inlet (3) and an outlet (5), connecting the fluid flow to the inlet (3) and outlet (5) so that fluid flows through the housing (7) from the inlet (3) to the outlet (5), positioning a magnet (47) within a tube (35) within the housing (7) so that magnetic particles in the fluid flow collect on the tube (35), closing the inlet (3) and outlet (5) to isolate the housing (7) from the fluid flow, **characterised by** removing the magnet (47) so that the magnetic particles collected on the tube (35) are released and fall to a lower end of the housing (7), opening a drain outlet (31) at the lower end of the housing (7) to discharge the magnetic particles through the drain outlet (31), replacing the magnet (47) in the tube (35) and re-filling the housing (7), wherein the tube (35) extends from the drain outlet (31) to an upper end of the housing (7) so that air or other gases within the housing (7) can flow downwards through the tube (35) to be discharged from the housing (7) when the drain outlet (31) is open.

15. A method according to claim 14 further comprising providing the housing (7) with a removable lid (11) and attaching the magnet (47) to the lid (11) so as to be removable from the housing (7) with the lid (11).

## Patentansprüche

1. Vorrichtung, ein Gehäuse (7) umfassend mit einem Einlass (3) und einem Auslass (5) zur Verbindung mit einem Fluidkreislauf, einem Magneten (47), der in dem Gehäuse (7) angeordnet ist, zum Entfernen magnetischer Teilchen, die von einem Fluidstrom durch das Gehäuse (7) mitgenommen werden, **dadurch gekennzeichnet, dass** das Gehäuse (7) an einem unteren Ende des Gehäuses (47) mit einer Ablassöffnung (31) versehen ist und sich der Magnet (47) innerhalb eines Rohrs (35) erstreckt, das sich von der Ablassöffnung (31) zu einem oberen Ende des Gehäuses (7) erstreckt, so dass im Gebrauch magnetische Teilchen, die aus dem Fluidstrom abgetrennt werden, an der Außenoberfläche des Rohrs (35) gesammelt werden, und wobei Luft oder andere Gase, die sich im Gehäuse (7) sammeln, innerhalb des Rohrs (35) nach unten strömen können, um aus dem Gehäuse (7) ausgetragen zu werden, wenn die Ablassöffnung (31) offen ist.

2. Vorrichtung nach Anspruch 1, wobei der Magnet (47) aus dem Inneren des Rohrs (35) entfernbar ist, so dass magnetische Teilchen, die im Gebrauch an der Außenoberfläche des Rohrs (35) gesammelt worden sind, freigegeben werden und aus dem Gehäuse (7) ausgetragen werden können, wenn die Ablassöffnung (31) offen ist.

3. Vorrichtung nach Anspruch 1 oder Anspruch 2, wobei das Gehäuse (7) einen Behälter (9), der die Ablassöffnung (31) am unteren Ende des Behälters (9) aufweist, und einen entfernbaren Deckel (11) umfasst, der eine Öffnung am oberen Ende des Behälters (9) schließt und den Magneten (47) trägt, so dass der Magnet (47) vom Gehäuse (7) entfernt wird, wenn der Deckel (11) vom Behälter (9) abgenommen wird.

4. Vorrichtung nach einem der vorangehenden Ansprüche, wobei der Einlass (3) in einer Seitenwand (13) des Behälters (9) vorgesehen ist und so gestaltet ist, dass er dem Fluid, das durch das Gehäuse (7) strömt, eine wirbelnde Bewegung mitteilt, und/oder so, dass Fluid, das in das Gehäuse (7) strömt, vom Rohr (35) weg gelenkt wird.

5. Vorrichtung nach einem der vorangehenden Ansprüche, wobei der Einlass (3) und der Auslass (5) mit Ventilen (27; 29) versehen sind, die geschlossen werden können, um das Gehäuse (7) gegen den Fluidkreislauf zu isolieren, wenn der Magnet (47) entfernt werden soll, um die magnetischen Teilchen, die sich am Rohr (35) gesammelt haben, freizugeben.

6. Vorrichtung nach einem der vorangehenden Ansprüche, wobei das Rohr (35) auf fluiddichte Weise in Bezug auf die Ablassöffnung (31) am unteren Ende des Gehäuses (7) angeordnet ist und eine Lücke (45) zwischen dem Rohr (35) und dem oberen Ende des Gehäuses (7) vorgesehen ist, damit Luft oder andere Gase, die sich im Gehäuse (7) sammeln, innerhalb des Rohrs (35) nach unten und aus dem Gehäuse (7) hinaus strömen können, wenn die Ablassöffnung (31) offen ist.

7. Vorrichtung nach einem der vorangehenden Ansprüche, wobei das Rohr (35) entfernbar ist, so dass das Gehäuse (7) geleert werden kann, wenn die Ablassöffnung (31) offen ist.

8. Vorrichtung nach einem der Ansprüche 1 bis 6, wobei das Rohr (35) so gestaltet ist, dass es eine oder mehrere Öffnungen am unteren Ende des Gehäuses (7) bereitstellt, die normalerweise geschlossen sind, wenn das Gehäuse (7) mit dem Fluidkreislauf verbunden ist und Fluid durch das Gehäuse (7) zirkuliert, während die Ablassöffnung (31) geschlossen ist, und die geöffnet werden können, wenn das Gehäuse (7) vom Fluidkreislauf isoliert ist, so dass das Gehäuse (7) geleert werden kann, wenn die Ablassöffnung (31) offen ist.

9. Vorrichtung nach einem der vorangehenden Ansprüche, wobei die Ablassöffnung (31) mit einem Ablassventil (33) versehen ist, das geschlossen werden kann, um zu verhindern, dass Fluid entweicht, wenn das Gehäuse (7) mit dem Fluidkreislauf verbunden ist und Fluid durch das Gehäuse (7) zirkuliert, und das geöffnet werden kann, wenn Luft oder andere Gase aus dem Inneren des Gehäuses (7) entfernt werden sollen, oder wenn magnetische Teilchen, die aus dem durch das Gehäuse (7) strömenden Wasser gesammelt worden sind, entfernt werden sollen.

10. Vorrichtung nach einem der vorangehenden Ansprüche, wobei das Gehäuse (7) als Dosierstelle zum Einführen eines Zusatzes in den Fluidkreislauf und/oder als Probenahmestelle verwendet werden kann, um eine Probe aus dem Fluidkreislauf zum Testen oder Analysieren zu entnehmen.

11. Vorrichtung nach einem der vorangehenden Ansprüche, wobei das Gehäuse (7) einen Füllstandssensor aufweist.

12. Vorrichtung nach einem der vorangehenden Ansprüche, wobei das Rohr (35) aus Kunststoffmaterial besteht und/oder nicht-magnetisch ist.

13. Vorrichtung nach einem der vorangehenden Ansprüche, wobei ein Filter (61) zwischen dem Einlass (3) und dem Auslass (5) vorgesehen ist, um nicht-magnetische Teilchen, die vom Fluidstrom durch das Gehäuse (7) mitgenommen werden, zu entfernen.

14. Verfahren zum Entfernen von magnetischen Teilchen, die in einem Fluidstrom suspendiert sind, wobei das Verfahren umfasst: Versehen eines Gehäuses (7) mit einem Einlass (3) und einem Auslass (5), Verbinden des Fluidstroms mit dem Einlass (3) und dem Auslass (5), so dass Fluid aus dem Einlass (3) durch das Gehäuse (7) zum Auslass (5) strömt, Anordnen eines Magneten (47) in einem Rohr (35) im Gehäuse (7), so dass sich magnetische Teilchen im Fluidstrom am Rohr (35) sammeln, Schließen des Einlasses (3) und des Auslasses (5), um das Gehäuse (7) gegen den Fluidstrom zu isolieren, **gekennzeichnet durch** Entfernen des Magneten (47), so dass die magnetischen Teilchen, die sich am Rohr (35) gesammelt haben, freigegeben werden und zu einem unteren Ende des Gehäuses (7) fallen, Öffnen einer Ablassöffnung (31) am unteren Ende des Gehäuses (7), um die magnetischen Teilchen **durch** die Ablassöffnung (31) auszutragen, Wiedereinsetzen des Magneten (47) in das Rohr (35) und Wiederauffüllen des Gehäuses (7), wobei sich das Rohr (35) von der Ablassöffnung (31) zu einem oberen Ende des Gehäuses (7) erstreckt, so dass Luft oder andere Gase im Gehäuse (7) **durch** das Rohr (35) nach unten strömen können, so dass sie aus dem Gehäuse (7) ausgetragen werden, wenn der Ablassauslass (31) offen ist.

15. Verfahren nach Anspruch 14, ferner das Versehen des Gehäuses (7) mit einem abnehmbaren Deckel (11) und das Befestigen des Magneten (47) am Deckel (11) umfassend, so dass er mit dem Deckel (11) vom Gehäuse (7) entfernt werden kann.

## Revendications

1. Un appareil comprenant un logement (7) possédant une admission (3) et une sortie (5) pour un raccordement à un circuit fluidique, un aimant (47) positionné dans le logement (7) destiné au retrait de particules magnétiques transportées par un flux de fluide au travers du logement (7), **caractérisé en ce que** le logement (7) est muni d'une sortie de drain (31) au niveau d'une extrémité inférieure du logement (7) et l'aimant (47) s'étend à l'intérieur d'un tube (35) qui s'étend de la sortie de drain (31) à une extrémité supérieure du logement (7) de sorte que, en utilisation, des particules magnétiques séparées du flux de fluide soient recueillies sur la surface extérieure du tube (35), et où de l'air ou d'autres gaz qui s'accumulent dans le logement (7) peuvent s'écouler vers le bas à l'intérieur du tube (35) de façon à être déchargés du logement (7) lorsque la sortie de drain (31) est ouverte.

2. L'appareil selon la Revendication 1, où l'aimant (47) est amovible de l'intérieur du tube (35) de sorte que des particules magnétiques recueillies à la surface extérieure du tube (35) en utilisation soient libérées et puissent être déchargées du logement (7) lorsque la sortie de drain (31) est ouverte.

3. L'appareil selon la Revendication 1 ou 2, où le logement (7) comprend un récipient (9) ayant la sortie de drain (31) au niveau de l'extrémité inférieure du récipient (9) et un couvercle amovible (11) qui referme une ouverture au niveau de l'extrémité supérieure du récipient (9) et soutient l'aimant (47) de sorte que l'aimant (47) soit retiré du logement (7) lorsque le couvercle (11) est détaché du récipient (9).

4. L'appareil selon l'une quelconque des Revendications précédentes où l'admission (3) est placée dans une paroi latérale (13) du récipient (9) et est configurée de façon à conférer un mouvement tourbillonnant à un fluide s'écoulant au travers du logement (7) et/ou de sorte qu'un fluide s'écoulant dans le logement (7) soit dirigé à l'écart du tube (35).

5. L'appareil selon l'une quelconque des Revendications précédentes, où l'admission (3) et la sortie (5) sont munies de soupapes (27, 29) qui peuvent être fermées de façon à isoler le logement (7) du circuit fluidique lorsqu'il est souhaité retirer l'aimant (47) de façon à libérer les particules magnétiques recueillies sur le tube (35).

6. L'appareil selon l'une quelconque des Revendications précédentes, où le tube (35) est placé de manière étanche par rapport à la sortie de drain (31) au niveau de l'extrémité inférieure du logement (7) et un espace de dégagement (45) est fourni entre le tube (35) et l'extrémité supérieure du logement (7) de façon à permettre à de l'air ou d'autres gaz qui s'accumulent dans le logement (7) de s'écouler vers le bas à l'intérieur du tube (35) et hors du logement (7) lorsque la sortie de drain (31) est ouverte.

7. L'appareil selon l'une quelconque des Revendications précédentes, où le tube (35) est amovible de sorte que le logement (7) puisse être vidé lorsque la sortie de drain (31) est ouverte.

8. L'appareil selon l'une quelconque des Revendications 1 à 6, où le tube (35) est configuré de façon à fournir une ou plusieurs ouvertures au niveau de l'extrémité inférieure du logement (7) qui sont normalement fermées lorsque le logement (7) est raccordé au circuit fluidique et qu'un fluide est circulé au travers du logement (7) avec la sortie de drain (31) fermée, et qui peuvent être ouvertes lorsque le logement (7) est isolé du circuit fluidique de sorte que le logement (7) puisse être vidé lorsque la sortie de drain (31) est ouverte.

9. L'appareil selon l'une quelconque des Revendications précédentes, où la sortie de drain (31) est munie d'une soupape de drain (33) qui peut être fermée de façon à empêcher une fuite de fluide lorsque le logement (7) est raccordé au circuit fluidique et qu'un fluide est circulé au travers du logement (7) et peut être ouverte lorsqu'il est souhaité retirer de l'air ou d'autres gaz de l'intérieur du logement (7) ou retirer des particules magnétiques recueillies par l'eau s'écoulant au travers du logement (7).

10. L'appareil selon l'une quelconque des Revendications précédentes, où le logement (7) peut être utilisé en tant que point de dosage pour l'introduction d'un additif au circuit fluidique et/ou en tant que point d'échantillonnage destiné au retrait d'un échantillon du circuit fluidique à des fins de test ou d'analyse.

11. L'appareil selon l'une quelconque des Revendications précédentes, où le logement (7) comprend un capteur de niveau.

12. L'appareil selon l'une quelconque des Revendications précédentes où le tube (35) se compose d'un matériau plastique et/ou est non magnétique.

13. L'appareil selon l'une quelconque des Revendications précédentes où un filtre (61) est placé entre l'admission (3) et la sortie (5) destiné au retrait de particules non magnétiques transportées par le flux de fluide au travers du logement (7).

14. Un procédé de retrait de particules magnétiques en suspension dans un flux de fluide, le procédé comprenant la fourniture d'un logement (7) avec une admission (3) et une sortie (5), le raccordement du flux de fluide à l'admission (3) et à la sortie (5) de sorte qu'un fluide s'écoule au travers du logement (7) de l'admission (3) à la sortie (5), le positionnement d'un aimant (47) à l'intérieur d'un tube (35) à l'intérieur du logement (7) de sorte que des particules magnétiques dans le flux de fluide s'accumulent sur le tube (35), la fermeture de l'admission (3) et de la sortie (5) de façon à isoler le logement (7) du flux de fluide, **caractérisé par** le retrait de l'aimant (47) de sorte que les particules magnétiques recueillies sur le tube (35) soient libérées et tombent vers une extrémité inférieure du logement (7), l'ouverture d'une sortie de drain (31) au niveau de l'extrémité inférieure du logement (7) de façon à décharger les particules magnétiques au travers de la sortie de drain (31), le replacement de l'aimant (47) dans le tube (35) et le re-remplissage du logement (7), où le tube (35) s'étend de la sortie de drain (31) à une extrémité supérieure du logement (7) de sorte que de l'air ou d'autres gaz à l'intérieur du logement (7) puissent s'écouler vers le bas au travers du tube (35) de façon à être déchargés du logement (7) lorsque la sortie de drain (31) est ouverte.

15. Un procédé selon la Revendication 14 comprenant en outre l'équipement du logement (7) avec un couvercle amovible (11) et le rattachement de l'aimant (47) au couvercle (11) de sorte qu'il soit amovible du logement (7) avec le couvercle (11).
